# EUROPÄISCHE PATENTANMELDUNG

(11) **EP 0 898 859 A1**
(43) Veröffentlichungstag der Anmeldung: **03.03.1999**
(21) Anmeldenummer: 97115006.5
(22) Anmeldetag: 30.08.1997
(51) Int. Cl.: A01B 29/00, A01B 29/04

(54) **Ackerwalze**

(71) Anmelder: Eck, Marcel, 84171 Baierbach (DE)
(72) Erfinder: Eck, Marcel, 84171 Baierbach (DE)

(57) **Zusammenfassung**

Die Ackerwalze (10) hat eine in einem Rahmen (12) gelagerte Achse (22), die mit Abstand nebeneinander angeordnete Scheiben (24) trägt. Jede Scheibe (24) hat an ihrem Außenumfang einen in der Draufsicht wellenförmigen, im Radius im wesentlichen gleichbleibenden Rand (30), der als Schneide wirkt. Zwischen jeweils zwei nebeneinanderliegende Scheiben (24) greift ein Abstreifelement (52) ein.

## Beschreibung

Die Erfindung betrifft eine Ackerwalze mit einer in einem Rahmen gelagerten Achse, die mit Abstand nebeneinander angeordnete Scheiben trägt.

Derartige Ackerwalzen dienen zur Bodenbearbeitung und können beispielsweise als Nachlaufwalzen ausgebildet sein, die an eine Kreiselegge oder eine Sämaschine angebaut werden. Ein Beispiel hierfür ist die DE-A 37 23 616, die ein Bodenbearbeitungsgerät zeigt, das mit einer Ackerwalze ausgerüstet ist, die als Profilwalze mit V-förmigen, umlaufenden Rillen ausgebildet ist. Diese Ackerwalze dient zur Tiefenführung der Sämaschine und zum Verdichten der Ackeroberfläche im Anschluß an den Sävorgang.

Aus der EP-A 191 871 ist eine Bodenverdichtungswalze bekannt, die in Fahrtrichtung vor einer Sämaschine angebracht ist und aus im Abstand nebeneinander angeordneten, zylinderförmigen Scheiben besteht, die zueinander parallele Bodenverdichtungsstreifen erzeugt, in die anschließend das Saatgut eingebracht wird.

Der Erfindung liegt die Aufgabe zugrunde, eine Ackerwalze der eingangs angegebenen Bauart so auszubilden, daß sie auch bei nasser Erde eine einwandfreie und störungsfreie Bodenbearbeitung durchführen kann, ohne daß der Bodenantrieb der Walze durch anhaftendes Erdreich eine Bremsung oder gar einen Stillstand der Walzenrotation erfährt.

Bei einer Ackerwalze der angegebenen Gattung wird diese Aufgabe erfindungsgemäß dadurch gelöst, daß jede Scheibe an ihrem Außenumfang einen in der Draufsicht wellenförmigen, im Radius im wesentlichen gleichbleibenden, als Schneide wirkenden Rand hat.

Der wellenförmige, schneidenartige Rand der bodenangetriebenen Ackerwalze sorgt für eine gute Krümelung auch nasser Böden oder verkrusteter Oberflächen und gleichzeitig für eine Rückverfestigung des Bodens, so daß sich die Ackerwalze vorteilhaft für den Anbau an ein Bodenbearbeitungsgerät eignet, beispielsweise eine Kreiselegge und/oder eine Drillmaschine. Die nachlaufende Ackerwalze übernimmt dabei auch die Aufgabe einer Tiefenführung des Bodenbearbeitungsgerätes.

Durch den wellenförmigen Rand der Scheiben wird ferner der Vorteil erzielt, daß in das Erdreich zickzackartig verlaufende Furchen eingearbeitet werden, so daß auch bei steilen Hanglagen und großen Regenmengen der Wasserablauf stark gehemmt wird, was die Gefahr einer Bodenerosion wesentlich verringert.

In Weiterbildung der Erfindung hat jede Scheibe im Bereich der Wellentäler eine radial nach außen abnehmende Breite. Damit werden beim Abrollen der Ackerwalze in Fahrtrichtung hintereinander alternierende Bodenkeile für die gewünschte Bodenverfestigung erzeugt, ohne daß diese an den Scheiben hängenbleiben, selbst dann nicht, wenn der Boden naß ist.

Die Ackerwalze läßt sich mit einfachen Mitteln dadurch herstellen, daß jede Scheibe aus zwei spanlos geformten Halbschalen besteht, die an ihrem den wellenförmigen Rand bildenden Außenumfang miteinander verschweißt sind. Als Werkstoff eignet sich hierfür Metallblech, es ist aber auch ein widerstandsfähiger Kunststoff denkbar. Die Scheiben können fest auf der Achse angebracht werden, beispielsweise durch Schweißen.

Nach einem weiteren Merkmal der Erfindung sind die Wellen aus Trapezen zusammengesetzt, von denen die kurze Grundseite am Außenumfang des Randes liegt, während die lange Grundseite über der Achse auf einem Kreis mit einem Radius liegt, der etwa einem Drittel des Scheibenradius entspricht.

Dabei ist es vorteilhaft, wenn die beiden Seitenflächen jeder Scheibe glatt sind und wenigstens radial innerhalb der langen Grundseite zueinander parallel verlaufen. Damit wird der Gefahr weiter entgegengewirkt, daß sich nasses Erdreich an den Scheiben festsetzen kann. Auf diese Weise wird eine Bremswirkung bei nasser Erde verhindert, so daß auch bei ungünstigen Bodenverhältnissen kein Stillstand der rotierenden Ackerwalze zu befürchten ist.

Hierzu trägt auch bei, daß die Seitenflächen im Bereich der langen Grundseite in im Querschnitt der Scheibe schräg ansteigende Flächen übergehen, die ihrerseits in radiale Flächenabschnitte übergehen, die an der jeweils benachbarten Halbschale anliegen.

Nach einem weiteren Merkmal der Erfindung ist vorgesehen, daß die kurzen Grundseiten der Trapeze durch schräge Querstege miteinander verbunden sind. Auf diese Weise wird am Außenumfang jeder Scheibe eine wellenförmige oder zickzackartige Schneide gebildet, die einerseits für eine gute Krümelung des Erdreiches sorgt und andererseits den Bodenantrieb aufgrund der schrägen Querstege erheblich verbessert, da diese ein Durchrutschen der Walze verhindern.

Von besonderem Vorteil ist es, wenn gemäß einer Weiterbildung der Erfindung zwischen zwei nebeneinanderliegende Scheiben ein Abstreifelement eingreift, das für eine Selbstreinigung der Ackerwalze sorgt. Dieses Abstreifelement kann aus einem plattenförmigen Finger bestehen, der entgegengesetzt zur Drehrichtung der Scheiben schräg nach unten geneigt ist und mit seinem freien Ende an der Achse anliegt.

Wenn die zueinander parallelen Ränder der plattenförmigen Finger in Berührung mit den zueinander parallelen Seitenflächen der Scheiben radial innerhalb der langen Grundseite der Trapeze kommen, üben die Abstreifelemente nur eine sehr geringe Bremswirkung auf die Ackerwalze aus, da ihre zueinander parallelen Ränder lediglich im Bereich eines kleinen Radius mit den Scheiben zusammenwirken.

Es ist vorteilhaft, wenn die plattenförmigen Finger der Abstreifelemente radial zur Achse verstellbar an jeweils einem Tragarm befestigt sind, wobei die Tragarme an einem Querbalken des Rahmens angebracht sind.

Die Erfindung ist nachsteherd an einem Ausführungsbeispiel erläutert, das in der Zeichnung dargestellt ist. Es zeigen:
Figur 1 eine schematische Teilansicht einer Ackerwalze gemäß der Erfindung von hinten und oben,
Figur 2 eine Draufsicht auf die Ackerwalze ohne Rahmen,
Figur 3 eine schematische Ansicht des Rahmens mit Abstreifelementen, jedoch ohne Ackerwalze,
Figur 4 eine Ansicht des Rahmens mit gestrichelt eingezeichneter Walze in Richtung des Pfeiles IV der Figur 3,
Figur 5 einen schematischen Querschnitt durch eine Scheibe in der Ebene V der Figur 4,
Figur 6 die Seitenansicht einer Scheibe,
Figur 7 die Draufsicht der Scheibe der Figur 6,
Figur 8 in vergrößertem Maßstab die Seitenansicht eines Abstreifelementes und
Figur 9 die Draufsicht des Abstreifelementes der Figur 8.

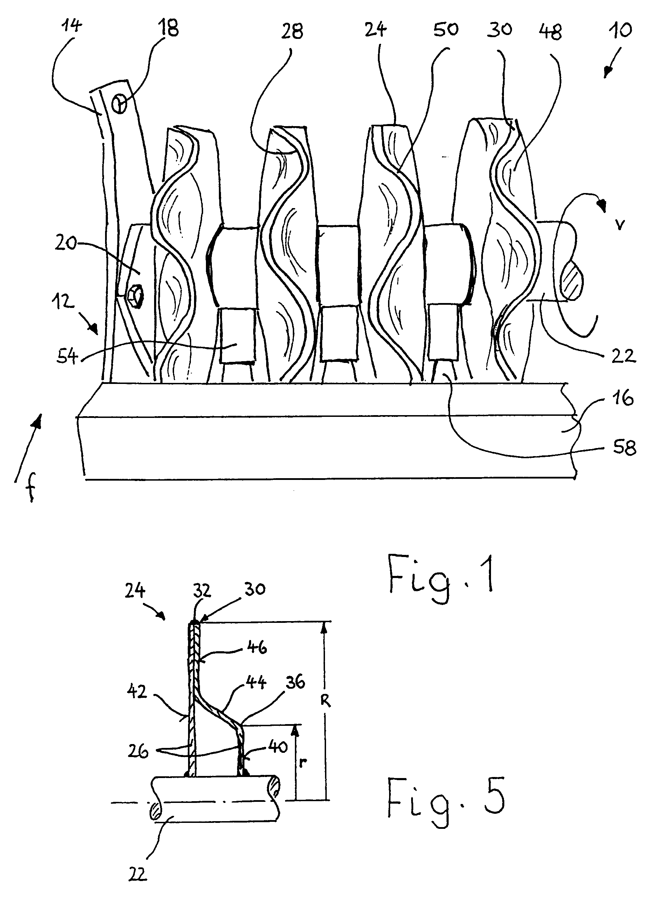

Wie in Figur 1 zu erkennen ist, hat die Ackerwalze 10 einen mit 12 angedeuteten Rahmen, der aus zwei Seitenplatten 14 (in Figur 1 ist nur eine Seitenplatte 14 gezeigt) besteht, die durch einen Querbalken 16 miteinander verbunden sind. Jede Seitenplatte 14 hat eine Bohrung 18 zum Anbau an ein Bodenbearbeitungsgerät.

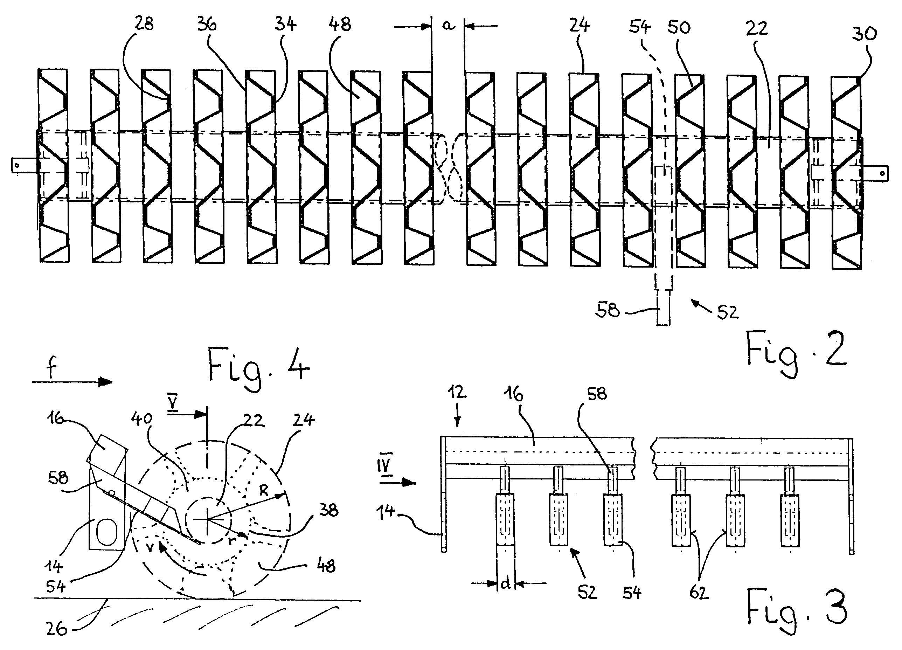

Zwischen den beiden Seitenplatten 14 des Rahmens 12 ist in Lagern 20 eine rohrförmige Achse 22 gelagert. Auf der Achse 22 sind mit gleichbleibendem Abstand a (vgl. Figur 2) nebeneinander runde Scheiben 24 befestigt, die gemäß Figur 4 im Einsatz der Ackerwalze 10 auf dem Boden 26 aufliegen. In Fahrtrichtung f ergibt sich durch den Bodenantrieb der Ackerwalze 10 die Drehrichtung v der Achse 22 und der darauf befestigten Scheiben 24.

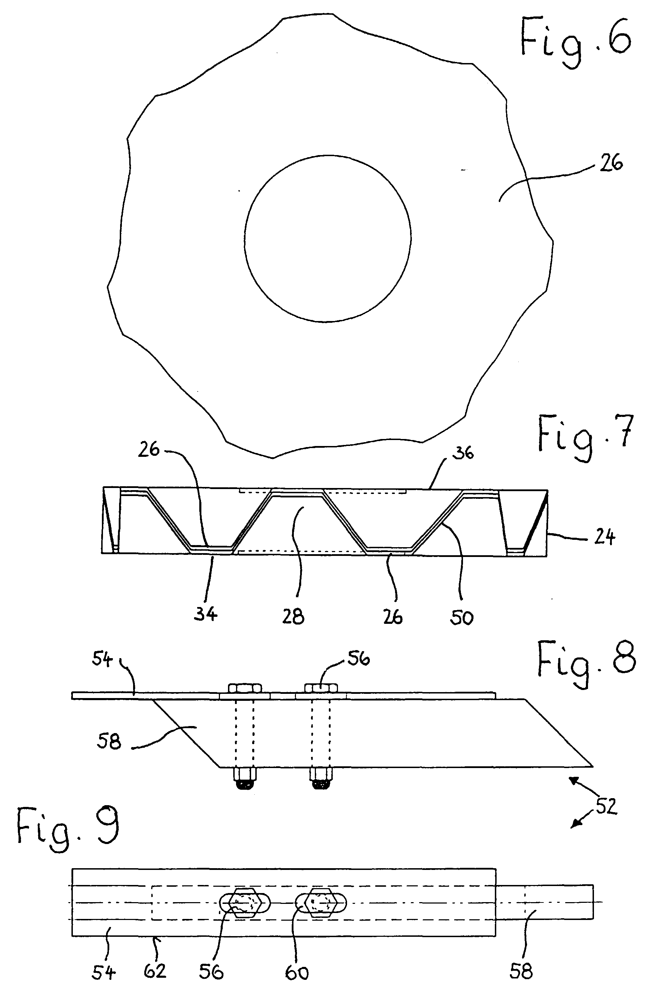

Jede Scheibe 24 der Ackerwalze 10 ist aus zwei spanlos geformten Halbschalen 26 zusammengesetzt, die beispielsweise aus Metallblech gepreßt sind. Die beiden Halbschalen 26 sind dabei so geformt, daß die Wellentäler 28 der einen Halbschale 26 genau in die Wellentäler 28 der anderen Halbschale einer Scheibe 24 passen. Nach dem Zusammenfügen der beiden Halbschalen 26 wird der wellenförmige Rand 30 am Außenumfang verschweißt (Schweißnaht 32 in Figur 5).

Die Figuren 2 und 7 zeigen, daß die Wellen des Randes 30 aus Trapezen zusammengesetzt sind. Wie Figur 2 zeigt, liegt die kurze Grundseite 34 jedes Trapez am Außenumfang des Randes 30, während die lange Grundseite 26 über der Achse 22 auf einem Kreisbogen 38 mit einem Radius r liegt, der etwa einem Drittel des Scheibenradius R entspricht (vgl. Figuren 4 und 5). Damit wird radial innerhalb der langen Grundseiten 36, d.h. innerhalb des Kreises 38, eine ringförmige, ebene Seitenfläche 40 gebildet, die parallel zur Seitenfläche 42 der gegenüberliegenden Halbschale 26 verläuft.

In Figur 5 ist weiter angedeutet, daß die beiden Seitenflächen 40, 42 jeder Scheibe 24 glatt sind, so daß ein Anhaften von Erde weitgehend verhindert wird. Die Seitenflächen 40 im Bereich der langen Grundseiten 36 gehen, ausgehend vom Kreisbogen 38, im Querschnitt der Scheibe 24 gesehen in eine schräg ansteigende Fläche 44 über; Figur 5 zeigt weiter, daß diese schrägen Flächen 44 in ihrem oberen Bereich an der jeweils benachbarten Halbschale 26 mit einem ebenen Flächenabschnitt 46 anliegen, der flach auf der gegenüberliegenden Seitenfläche 42 aufliegt.

Mit der erläuterten Formgebung der beiden Halbschalen 26 ergibt sich eine Scheibe 24, die im Bereich der Wellentäler 28 eine radial nach außen abnehmende Breite hat, so daß im Zusammenwirken mit der glatten Ausbildung der Flächen ein Anhaften von Erdreich auch im nassen Zustand verhindert wird. Durch die in Figur 5 erkennbare Keilform der in den Wellentälern 28 gebildeten Mulden 48 (vgl. Figur 1) fällt anhaftendes Erdreich durch Schwerkraft- und Fliehkrafteinwirkung bei Rotation der Ackerwalze 10 wieder nach außen.

Sowohl die Schneidwirkung des wellenförmig umlaufenden Randes 30 der Ackerwalze 10, die eine gute Bodenkrümelung bewirkt, als auch ein kraftvoller Bodenantrieb der Ackerwalze werden dadurch erreicht, daß die kurzen Grundseiten 34 der Trapeze durch schräge Querstege 50 des Randes 30 miteinander verbunden sind.

Die Figuren 1 bis 4 zeigen, daß zwischen jeweils zwei nebeneinanderliegende Scheiben 24 ein Abstreifelement 52 eingreift, das für eine stetige Reinigung des Zwischenraums zwischen den Scheiben 24 sorgt. Jedes Abstreifelement 52 besteht aus einem plattenförmigen Finger 54, dessen Breite d etwa dem Abstand a zwischen zwei Scheiben 24 entspricht und der gemäß den Figuren 8 und 9 über Schrauben 56 radial zur Achse 22 verstellbar an einem Tragarm 58 befestigt ist. Die Schrauben 56 greifen hierbei durch Langlöcher 60 des plattenförmigen Fingers 54, so daß dieser in seiner Längsrichtung verstellt werden kann. Die Tragarme 58 sind, wie die Figuren 3 und 4 zeigen, mit gleichbleibendem Abstand nebeneinander an dem Querbalken 16 befestigt.

Aus Figur 4 ergibt sich, daß die Tragarme 58 so angebracht sind, daß die plattenförmigen Finger 54 entgegengesetzt zur Drehrichtung v der Scheiben 24 schräg nach unten weisen und mit ihrem freien Ende an der rohrförmigen Achse 22 anliegen. Die freien Enden der plattenförmigen Finger 54 streifen dadurch von der rotierenden Achse 22 anhaftendes Erdreich ab. Figur 4 zeigt ferner, daß die zueinander parallelen Ränder 62 der plattenförmigen Finger 54 nur in Berührung mit den zueinander parallelen Seitenflächen 40 der Scheiben 24 kommen, die radial innerhalb der längeren Grundseiten 36, d.h. innerhalb des Kreises 38 mit dem Radius r liegen. Im Bereich (R - r) findet keine Berührung zwischen den Abstreifelementen 52 und den Scheiben 24 statt, so daß die Bremswirkung auf ein Mindestmaß beschränkt ist.

## Patentansprüche

1. Ackerwalze mit einer in einem Rahmen gelagerten Achse, die mit Abstand nebeneinander angeordnete Scheiben trägt, dadurch gekennzeichnet, daß jede Scheibe (24) an ihrem Außenumfang einen in der Draufsicht wellenförmigen, im Radius im wesentlichen gleichbleibenden, als Schneide wirkenden Rand (30) hat.

2. Ackerwalze nach Anspruch 1, dadurch gekennzeichnet, daß jede Scheibe (24) im Bereich der Wellentäler (28) eine radial nach außen abnehmende Breite hat.

3. Ackerwalze nach Anspruch 1 oder 2, dadurch gekennzeichnet, daß jede Scheibe (24) aus zwei spanlos geformten Halbschalen (26) besteht, die an ihrem den wellenförmigen Rand (30) bildenden Außenumfang miteinander verschweißt sind.

4. Ackerwalze nach einem der Ansprüche 1 bis 3, dadurch gekennzeichnet, daß die Scheiben (24) fest auf der Achse (22) angebracht sind.

5. Ackerwalze nach einem der Ansprüche 1 bis 4, dadurch gekennzeichnet, daß die Wellen aus Trapezen zusammengesetzt sind.

6. Ackerwalze nach einem der vorhergehenden Ansprüche, dadurch gekennzeichnet, daß die kurze Grundseite (36) jedes Trapezes am Außenumfang des Randes (30) liegt, während die lange Grundseite (36) über der Achse (22) auf einem Kreis (38) mit einem Radius (r) liegt, der etwa einem Drittel des Scheibenradius (R) entspricht.

7. Ackerwalze nach Anspruch 6, dadurch gekennzeichnet, daß die beiden Seitenflächen (40, 42) jeder Scheibe glatt sind und wenigstens radial innerhalb der langen Grundseiten (36) zueinander paralell verlaufen.

8. Ackerwalze nach Anspruch 7, dadurch gekennzeichnet, daß die Seitenflächen (40) im Bereich der langen Grundseiten (36) in im Querschnitt der Scheibe (24) schräg ansteigende Flächen (44) übergehen, die in radiale Flächenabschnitte (46) münden, welche an der jeweils benachbarten Kalbschale (26) anliegen.

9. Ackerwalze nach einem der Ansprüche 5 bis 8, dadurch gekennzeichnet, daß die kurzen Grundseiten (34) der Trapeze durch schräge Querstege (50) miteinander verbunden sind.

10. Ackerwalze nach einem der vorhergehenden Ansprüche, dadurch gekennzeichnet, daß zwischen zwei nebeneinanderliegende Scheiben (24) ein Abstreifelement (52) eingreift.

11. Ackerwalze nach Anspruch 10, dadurch gekennzeichnet, daß das Abstreifelement (52) aus einem plattenförmigen Finger (54) besteht, der entgegengesetzt zur Drehrichtung (v) der Scheiben (24) schräg nach unten geneigt ist und mit seinem freien Ende an der Achse (22) anliegt.

12. Ackerwalze nach einem der Ansprüche 7 und 11, dadurch gekennzeichnet, daß die zueinander parallelen Ränder (62) der plattenförmigen Finger (54) in Berührung mit den zueinander parallelen Seitenflächen (40) der Scheiben (24) radial innerhalb der langen Grundseiten (36) der Trapeze kommen.

13. Ackerwalze nach Anspruch 11 oder 12, dadurch gekennzeichnet, daß die plattenförmigen Finger (54) radial zur Achse (22) verstellbar an jeweils einem Tragarm (58) befestigt sind.

14. Ackerwalze nach Anspruch 13, dadurch gekennzeichnet, daß die Tragarme (58) an einem Querbalken (16) des Rahmens (12) befestigt sind.
